Europäisches Patentamt

European Patent Office

Office européen des brevets

(19)

(11) Publication number: **0 167 312**
**B1**

# EUROPEAN PATENT SPECIFICATION

(12)

(45) Date of publication of patent specification: **14.09.88**

(51) Int. Cl.⁴: **F 16 H 1/455,** F 16 D 35/00

(21) Application number: **85304204.2**

(22) Date of filing: **13.06.85**

(54) Viscous coupling.

(30) Priority: **19.06.84 GB 8415606**

(43) Date of publication of application:
**08.01.86 Bulletin 86/02**

(45) Publication of the grant of the patent:
**14.09.88 Bulletin 88/37**

(84) Designated Contracting States:
**DE FR GB IT SE**

(56) References cited:
**EP-A-0 068 309**
**FR-A-2 168 763**
**GB-A-1 252 753**
**GB-A-1 475 141**
**US-A-2 883 884**
**US-A-3 396 605**
**US-A-4 048 872**

(73) Proprietor: **FORD MOTOR COMPANY LIMITED**
**Eagle Way**
**Brentwood Essex CM13 3BW (GB)**
(84) **GB IT SE**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Diggins, Raymond**
**Beaconhill Farm Kelvendon Hatch**
**Brentwood Essex (GB)**

(74) Representative: **Messulam, Alec Moses et al**
**A. Messulam & Co. 24 Broadway**
**Leigh on Sea Essex SS9 1BN (GB)**

## Description

This invention relates to a viscous coupling, for example of the type used in a four-wheel drive transmission in a motor vehicle.

A viscous coupling is known from GB—A— 1 252 753. This coupling has an enclosed chamber containing interleaved disc-like elements. One set of the elements is mounted on a driving member and the other set of elements is mounted on a driven member. The chamber is filled with a high viscosity fluid which penetrates between the interleaved elements. When one set of elements is turned, the viscosity of the fluid drags the other set of elements along, thus allowing torque to be transmitted between the driving and driven members.

Viscous couplings are also known from EP—A—68 309 and US—A—2 883 884, in which three rotatable members are interconnected through one coupling. A first set of disc-like elements is mounted on one member, and other sets of elements are mounted on the other members, with both other sets being interleaved with first set.

US—A—3,396,605 relates to an automotive drive axle or rear wheel drive for transmitting power from a propeller shaft to the rear wheels of an automotive vehicle. In the drive axle, a viscoelastic liquid is employed to transmit power, the liquid being confined between one or more pairs of coaxial discs or plates which provide radial power transmitting surfaces.

EP—A—68309 relates to a differential drive arrangement comprising at least three relatively rotatable members and viscous fluid coupling means for drive transmission between said members. The rotatable members comprise a housing of hollow cylindrical configuration and two shafts, each coaxial with the housing and extending through opposite ends of the housing. The viscous fluid coupling means comprises a viscous fluid in contact with mutually interleaved sets of plates in the housing, the plates of each set being in driving connection with respective one of the rotatable members.

With such couplings, a considerable pressure is built up internally in the viscous fluid when relative movement between the components takes place. The chamber which contains the high viscosity fluid has to be able to contain this pressure and prevent any of the fluid leaking out through the seals.

According to the present invention, there is provided a viscous coupling for providing a limited-slip coupling between three or more coaxial rotatable members, the coupling comprising an enclosed chamber bounded by wall sections each of which is connected to one of the rotatable members, three or more sets of elements in the chamber, each set being in driving connection with one of the rotatable members and all the sets being mounted for rotation about a common coupling axis, each set of elements being interleaved with another set of elements, and a substance in the chamber in contact with the elements and which transmits torque from the elements of one set to the elements of the set with which it is interleaved, the torque transmitted increasing with increase in the mutual speed difference between the sets, wherein the chamber is sealed by seals arranged between the wall sections, and characterised in that each of the wall sections which has a surface lying within the chamber and extending other than parallel to the coupling axis also has an oppositely facing surface within the chamber, of corresponding area, so that there is no net axial force exerted on any of the wall sections by pressure arising in the chamber.

With this construction, there is no tendency for the different wall sections to move relative to one another under the pressure which arises internally, and the seals are therefore not unduly stressed. This makes the coupling more relaible than is the case in prior art couplings where there are net forces acting on the chamber walls which inevitably affect the life of the chamber seals. Since the forces acting on the components are low, construction can be simplified and the cost thereof may be reduced.

Although a preferred form of the invention provides coupling between three rotatable members, the invention is not limited to this particular number of members and the coupling may couple more than three rotatable members.

The chambers is preferably annular in shape, and a first set of elements may be mounted on the outer periphery of the chamber with second and third sets being mounted on the internal periphery, at axially spaced positions and both being interleaved with the first set.

There may be a gap between the second and third sets of elements, and the first set may be split into two subsets, one subset interleaved with the second set and the other subset interleaved with the third set.

The coupling can be arranged so that the coupling conditions between the first and second sets of elements are different from the coupling conditions between the first and third sets. This can be achieved by mounting the second and third sets on sleeves of different diameter, or by varying the dimensions of the elements so that the area of overlap is different. This facility is particularly desirable in the case of a coupling for use as a centre differential in a four wheel drive system.

The seals between the chamber wall sections are preferably all arranged at the same radius from the coupling axis, to avoid any net forces acting on the wall sections.

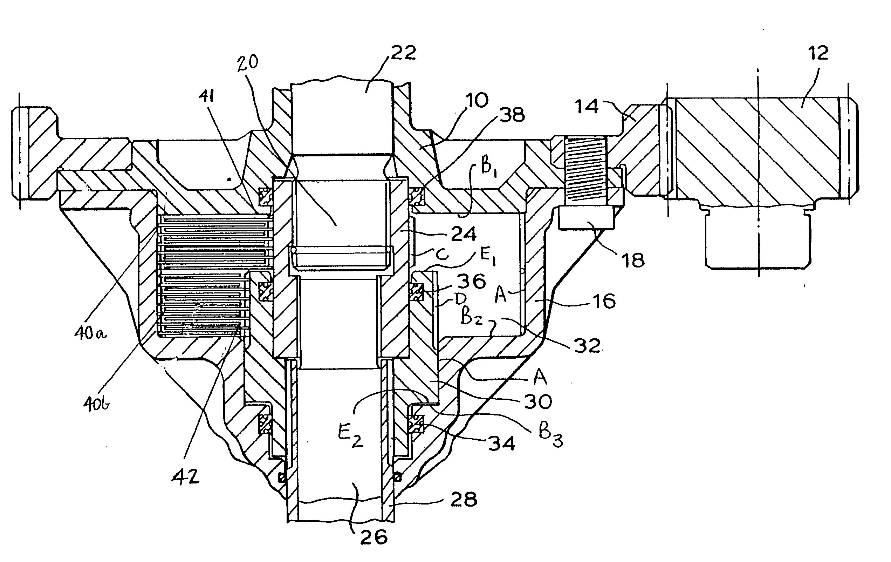

The invention will now be described further, by way of example, with reference to the accompanying drawing which shows a section through a viscous coupling in accordance with the invention.

A first rotatable member 10 is driven in rotation by a pinion 12 meshing with a spur gear ring 14 on the periphery of the member 10. Fast with the member 10 is a chamber housing 16 and the member 10, the gear ring 14 and the housing 16 are all secured together by fastenings, one of which is indicated at 18.

A second rotatable member 20 has an input shaft 22 splined to a coupling sleeve 24, with an output shaft 26 splined to the other end of the coupling sleeve.

A third rotatable member 28 is tubular and surrounds the output shaft 26 of the second rotatable member. This third member 28 is splined to a sleeve 30.

An enclosed chamber 32 is bounded by three components, namely the housing 16 and portions of the coupling sleeve 24 and of the sleeve 30. The chamber is sealed by three seals 34, 36 and 38 each of which seals one of the chamber-bounding components to an adjacent component. The components each have surfaces parallel to the coupling axis and other surfaces which are not parallel. The housing 16 has surfaces A which are parallel to the axis, and surfaces $B_1$, $B_2$ and $B_3$ which are perpendicular to the axis. Note that the chamber internal pressure will act on the surface $B_3$, as this is within the seals and the viscous fluid in the chamber will be in contact with this surface. The coupling sleeve 24 has only surface C facing into the chamber, and this surface is parallel to the axis. The sleeve 30 has a surface D which is parallel to the axis, and surfaces $E_1$ and $E_2$ which are perpendicular to the axis.

During operation, an internal pressure is produced in the chamber when there is relative movement between the elements. This pressure is exerted on all the walls of the chamber. The pressure on surface $B_1$ is counteracted by the pressure on surfaces $B_2$ and $B_3$, and since the combined surface area normal to the coupling axis of surfaces $B_2$ and $B_3$ is equal to the surface area of surface $B_1$, there will be no net axial force on the housing 16 and therefore no tendency for the seals 34 and 38 to be displaced by relative movement between the components. Similarly, for the sleeve 30, the surfaces $E_1$ and $E_2$ are equal in projected area normal to the coupling axis.

Each of the components supports a set of thin, disc-like elements (40a, 40b, 41, 42). The elements (42) on the sleeve 30 are interleaved with one half of the elements (40b) on the housing 16 and the elements (41) on the coupling sleeve 24 are interleaved with the other half of the elements (40a) on the housing 16.

The chamber 32 is filled with a high viscosity fluid. Examples of suitable fluids are (a) silicone fluid or uncured rubber in mineral oil, and (b) distilled water, a solution of zinc nitrate, calcium carbonate and a water softener (sodium hexametaphosphate) known as Calgon.

The coupling described can be used as a centre differential in a four wheel drive vehicle transmission to control the relative slip between the front and rear axle differentials. For example, the housing 16 can be driven from the engine via the gearbox, the coupling sleeve 24 can be coupled to one of the front wheels and, via a front axle differential, to the other front wheel and the sleeve 30 can be coupled to the rear wheels drive shaft which feeds into a rear axle differential.

The coupling is compact and allows three coaxial members to be driven together. To determine the ratio of torque transmission between the two transmission paths (first member to second member and first member to third member) the spacing between the interleaved elements could be changed, or the area of overlap could be adjusted either by changing the sizes of the elements, or by changing the distance between the chamber walls in one or the other part of the chamber. Other possible ways of changing the ratio of torque transmission are to change the viscosity of the fluid or to change the form of the plate elements, perhaps by including slots or holes in them.

## Claims

1. A viscous coupling for providing a limited-slip coupling between three or more coaxial rotatable members (10, 20, 28), the coupling comprising an enclosed chamber (32) bounded by wall sections each of which is connected to one of the rotatable members, three or more sets of elements (40a, 40b, 41, 42) in the chamber (32), each set being in driving connection with one of the rotatable members (10, 20, 28) and all the sets being mounted for rotation about a common coupling axis, each set of elements being interleaved with another set of elements and a substance in the chamber in contact with the elements (40a, 40b, 41, 42) and which transmits torque from the elements of one set to the elements of the set with which it is interleaved, the torque transmitted increasing with increase in the mutual speed difference between the sets, wherein the chamber is sealed by seals (34, 36, 38) arranged between the wall sections and characterised in that each of the wall sections which has a surface ($E_1$) lying within the chamber and extending other than parallel to the coupling axis also has an oppositely facing surface ($E_2$) within the chamber (32) of corresponding area, so that there is no net axial force exerted on any of the wall sections by pressure arising in the chamber.

2. A coupling as claimed in Claim 1, characterised in that the chamber (32) is annular in shape, and a first set of elements (40a, 40b) is mounted on the outer periphery of the chamber (32) with second and third sets of elements (41, 42) being mounted on the internal periphery, at axially spaced positions and both being interleaved with the first set of elements (40a, 40b).

3. A coupling as claimed in Claim 2, characterised in that a gap is present between the second and third sets of elements (41, 42), and the first set of elements is split into two subset of elements (40a, 40b), the elements (40a) of the one subset being interleaved with the elements (41) of the second set and the elements (40b), of the other subset being interleaved with the elements (42) of the third set.

4. A coupling as claimed in Claim 3, characterised in that it is arranged so that the coupling conditions between said one subset and second set of elements (40a, 41) are different from the coupling conditions between said other subset and third set of elements (40b, 42).

5. A coupling as claimed in Claim 4, characterised in that the elements (41, 42) of the second and third sets are mounted on sleeves (24, 30) of different diameter.

6. A coupling as claimed in any one of the preceding claims, characterised in that the seals (34, 36, 38) between the chamber wall sections are all arranged at the same radius from the coupling axis, to avoid any net forces acting on the wall sections.

7. A motor vehicle having a four wheel drive transmission, characterised in that the centre differential is a viscous coupling as claimed in any preceding claim.

**Patentansprüche**

1. Viskosekupplung zur Schaffung einer einen begrenzten Schlupf bewirkenden Kupplung zwischen drei oder mehr koaxialen Drehelementen (10, 20, 28), wobei die Kupplung eine geschlossene, von Wandabschnitten begrenzte Kammer (32) umfaßt, wobei jeder dieser Abschnitte mit einem der Drehelemente verbunden ist, sowie drei oder mehr Sätze von Elementen (40a, 40b, 41, 42) in der Kammer (32), wobei jeder Satz in antreibender Verbindung mit einem der Drehelemente (10, 20, 28) steht, und wobei alle Sätze so montiert sind, daß sie sich um eine gemeinsame Kupplungsachse drehen, wobei jeder Satz von Elementen mit einem anderen Satz von Elementen verzahnt ist und eine Substanz in der Kammer in Kontakt mit den Elementen (40a, 40b, 41, 42) steht, die das Drehmoment von den Elementen eines Satzes auf die Elemente desjenigen Satzes überträgt, mit dem eine Verzahnung besteht, wobei das übertragene Drehmoment bei sich steigender Drehzahldifferenz zwischen den Sätzen zunimmt, wobei die Kammer durch Dichtungen (34, 36, 38) abgedichtet ist, die zwischen den Wandabschnitten angeordnet sind, dadurch gekennzeichnet, daß jeder der Wandabschnitte mit einer Oberfläche ($E_1$), die innerhalb der Kammer liegt und nicht parallel zur Kupplungsachse verläuft, ebenfalls eine gegenüberliegende Fläche ($E_2$) innerhalb der Kammer (32) mit entsprechenden Abmessungen aufweist, so daß auf keinen der Wandabschnitte eine durch Druck in der Kammer entstehende Nettoaxialkraft einwirkt.

2. Kupplung gemäß Anspruch 1, dadurch gekennzeichnet, daß die Kammer (32) ringförmig ausgebildet ist, und daß ein erster Satz von Elementen (40a, 40b) am Außenumfang der Kammer (32) montiert ist, wobei zweite und dritte Sätze von Elementen (41, 42) am Innenumfang mit Abstand in Axialrichtung montiert sind, wobei beide eine Verzahnung mit dem ersten Satz von Elementen (40a, 40b) aufweisen.

3. Kupplung gemäß Anspruch 2, dadurch gekennzeichnet, daß ein Spalt zwischen den zweiten und dritten Sätzen von Elementen (41, 42) vorgesehen ist, und daß der erste Satz von Elementen in zwei Hilfssätze von Elementen (40a, 40b) aufgeteilt ist, wobei die Elemente (40a) des einen Hilfssatzes mit den Elementen (41) des zweiten Satzes und die Elemente (40b) des anderen Hilfssatzes mit den Elementen (42) des dritten Satzes verzahnt sind.

4. Kupplung gemäß Anspruch 3, dadurch gekennzeichnet, daß die Anordnung so vorgesehen ist, daß die Kupplungsverhältnisse zwischen dem genannten einen Hilfssatz und dem zweiten Satz von Elementen (40a, 41) sich von den Kupplungsverhältnissen zwischen dem genannten anderen Hilfssatz und dem dritten Satz von Elementen (40b, 42) unterscheiden.

5. Kupplung gemäß Anspruch 4, dadurch gekennzeichnet, daß die Elemente (41, 42) der zweiten und dritten Sätze auf Buchsen (24, 30) von unterschiedlichem Durchmesser montiert sind.

6. Kupplung gemäß irgendeinem der vorstehenden Ansprüche, dadurch gekennzeichnet, daß die Dichtungen (34, 36, 38) zwischen den Kammerwandabschnitten alle im gleichen Radius von der Kupplungsachse angeordnet sind, um so das Einwirken von Nettokräften auf die Wandabschnitte zu unterbinden.

7. Kraftfahrzeug mit Vierradantriebsübertragung, dadurch gekennzeichnet, daß es sich beim zentralen Ausgleichsgetriebe um eine Viskosekupplung gemäß irgendeinem der vorstehenden Ansprüche handelt.

**Revendications**

1. Coupleur à fluide visqueux destiné à établir un accouplement à glissement limité entre trois ou plus de trois organes rotatifs coaxiaux (10, 20, 28), le coupleur comprenant une chambre fermée (32) limitée par des sections de parois dont chacune est reliée à l'un des organes rotatifs, trois ou plus de trois jeux d'éléments (40a, 40b, 41, 42) logés dans la chambre (32), chaque jeu étant en liaison de transmission de l'effort avec un des organes rotatifs (10, 20, 28) et tous les jeux étant montés pour tourner autour d'un axe commun du coupleur, chaque jeu d'éléments étant imbriqué avec un autre jeu d'éléments, et une substance contenue dans la chambre, et en contact avec les éléments (40a, 40b, 41, 42) et qui transmet le couple des éléments d'un jeu aux éléments du jeu avec lequel il est imbriqué, le couple transmis croissant avec l'accroissement de la différence de vitesse relative entre les éléments, dans lequel la chambre est rendue étanche par des garnitures d'étanchéité (34, 36, 38) interposées entre les sections de parois, et caractérisé en ce que chacune des sections de parois qui possède une surface ($E_1$) située à l'intérieur de la chambre et s'étendant dans une direction autre que la direction parallèle à l'axe du coupleur possède en outre une surface ($E_2$) d'aire correspondante, située dans la chambre (32) et regardant dans le sens opposé, de sorte que la pression qui règne dans la chambre n'exerce de force axiale nette sur aucune des sections de parois.

2. Coupleur selon la revendication 1, caractérisé en ce que la chambre (32) est de forme annulaire et qu'un premier jeu d'éléments (40a, 40b) est monté sur la périphérie extérieure de la chambre (32), le deuxième et le troisième jeux d'éléments (41, 42) étant montés sur la périphérie intérieure, dans des positions espacées axialement, et ces deux jeux étant imbriqués avec le premier jeu d'éléments (40a, 40b).

3. Coupleur selon la revendication 2, caractérisé en ce qu'un espace libre est présent entre les deuxième et troisième jeux d'éléments (41, 42) et que le premier jeu d'éléments est divisé en deux jeux partiels d'éléments (40a, 40b), les éléments (40a) d'un jeu partiel étant imbriqués avec les éléments (41) du deuxième jeu et les éléments (40b) de l'autre jeu partiel étant imbriqués avec les éléments (42) du troisième jeu.

4. Coupleur selon la revendication 3, caractérisé en ce qu'il est agencé de telle manière que les conditions d'accouplement existant entre ledit premier jeu partiel et le deuxième jeu d'éléments (40a, 41) sont différentes des conditions d'accouplement existant entre ledit autre jeu partiel et le troisième jeu d'éléments (40b, 42).

5. Coupleur selon la revendication 4, caractérisé en ce que les éléments (41, 42) des deuxième et troisième jeux sont montés sur des manchons (24, 30) possédant des diamètres différents.

6. Coupleur selon l'une quelconque des revendications précédentes, caractérisé en ce que les garnitures d'étanchéité (34, 36, 38) interposées entre les sections de parois de la chambre sont toutes placées au même rayon, mesuré à partir de l'axe du coupleur, pour éviter qu'il ne s'exerce des forces nettes sur les sections de parois.

7. Véhicule automobile comprenant une transmission à quatre roues motrices, caractérisé en ce que le différentiel central est un coupleur à fluide visqueux selon une quelconque des revendications précédentes.